# EUROPEAN PATENT SPECIFICATION

(11) **EP 4 671 572 B1**
(45) Date of publication and mention of the grant of the patent: **22.07.2026**
(21) Application number: 25182746.5
(22) Date of filing: 13.06.2025
(51) Int. Cl.: F16H 61/662, F16H 63/42

(54) **STRADDLED VEHICLE**
GRÄTSCHSITZFAHRZEUG
VÉHICULE À SELLE

(30) Priority: 28.06.2024 JP 2024104826
(43) Date of publication of application: 31.12.2025
(73) Proprietor: Yamaha Hatsudoki Kabushiki Kaisha, Iwata-shi, Shizuoka 438-8501 (JP)
(72) Inventor: EGUCHI, Kazuya, Iwata-shi, 4388501 (JP)
(74) Representative: Studio Torta S.p.A.

(56) References cited:
- EP-A1- 2 031 282
- EP-B1- 1 135 633
- JP-A- 2009 220 687
- US-A1- 2006 003 866

## Description

### Technical field

The present invention relates to a straddled vehicle.

### Prior art

Japanese Unexamined Patent Publication No. 2009-220687A discloses a straddled vehicle. The straddled vehicle includes a transmission. The speed change ratio of the transmission is electronically controlled.

The transmission includes a transmission mechanism. The transmission mechanism includes an input shaft, a primary sheave, a secondary sheave, and a V-belt. The primary sheave is connected to the input shaft. The primary sheave includes a primary fixed sheave and a primary movable sheave. The primary fixed sheave is fixed to one end of the input shaft. The primary movable sheave is located to face the primary fixed sheave. The primary movable sheave is movable in an axial direction of the input shaft. The secondary sheave is located behind the primary sheave. The secondary sheave includes a secondary fixed sheave and a secondary movable sheave. The secondary movable sheave faces the secondary fixed sheave. The V-belt is wound around the primary sheave and the secondary sheave.

The speed change ratio of the transmission depends on a shift position of the transmission. The shift position of the transmission is, for example, a position of the primary movable sheave in the axial direction of the input shaft.

The transmission includes a motor and a controller. The controller drives the motor. The primary movable sheave moves in the axial direction of the input shaft by driving of the motor.

The straddled vehicle includes a main switch. The power supply of the motor is turned on and off by operation of the main switch. When the main switch is off, the power supply of the motor is cut off, and the motor is stopped.

The above-described transmission is classified as a continuously variable transmission. When the main switch is off, the power supply of the motor is turned off, and driving of the motor is stopped. Therefore, when the main switch is off, the motor cannot change the shift position of the continuously variable transmission. When the main switch is off, the shift position of the continuously variable transmission is fixed.

The shift position of the continuously variable transmission includes a LOW position and a position other than the LOW position. When the shift position is at the LOW position, the speed change ratio of the continuously variable transmission is the largest. The speed change ratio when the shift position is at a position other than the LOW position is smaller than the speed change ratio when the shift position is at the LOW position.

When the straddled vehicle travels, the shift position is often at a position other than the LOW position. Therefore, if the main switch is off while the straddled vehicle is traveling, the shift position may be maintained at a position other than the LOW position. Thereafter, when the engine starts, the shift position may be at a position other than the LOW position. When the engine starts in a state where the shift position is at a position other than the LOW position, the ride comfort of the straddled vehicle for a driver may change.

For example, when the engine starts in a state where the shift position is at a position other than the LOW position, a centrifugal clutch of the straddled vehicle may connect the continuously variable transmission and the rear wheel at an earlier timing. As a result, the engine starts slowly and the straddled vehicle has a push feeling.

US-A-2006/003866 discloses a straddled vehicle according to the preamble of claim 1.

### Description of the invention

The present invention has been made in view of such circumstances, and an object thereof is to provide a straddled vehicle that can easily notify a driver that an engine starts at a position, which is a shift position of a continuously variable transmission, other than a LOW position.

In order to achieve such an object, the present invention has the following configuration.

That is, the present invention is a straddled vehicle including:
an engine generating power;
a continuously variable transmission transmitting the power of the engine to a rear wheel;
an electric motor changing a shift position of the continuously variable transmission;
a sensor detecting the shift position;
a controller acquiring a detection result of the sensor;
a main switch switched between on for turning on a power supply of the electric motor and off for turning off the power supply of the electric motor; and
a notification unit electrically connected to the controller and receiving information from the controller, in which
in a case where an initial position, which is the shift position at time when the main switch is switched from off to on, is at a position other than a LOW position, the controller causes the notification unit to output an alarm.

The straddled vehicle includes an engine, a continuously variable transmission, an electric motor, a sensor, a controller, a main switch, and a notification unit. The engine generates power. The continuously variable transmission transmits power of the engine to a rear wheel. The electric motor changes a shift position of the continuously variable transmission. The sensor detects the shift position of the continuously variable transmission. The controller acquires a detection result of the sensor. The main switch is switched between on for turning on the power supply of the electric motor and off for turning off the power supply of the electric motor. The notification unit is electrically connected to the controller. The notification unit receives information from the controller. When an initial position is at a position other than a LOW position, the controller causes the notification unit to output an alarm. The initial position is the shift position at time when the main switch is switched from off to on. After the main switch is switched from off to on, the engine starts. The initial position is substantially the same as the shift position at time when the engine starts. Therefore, it is easy to notify a driver that the engine starts at a position, which is the shift position of the continuously variable transmission, other than the LOW position.

In the straddled vehicle,
it is preferable that when the main switch is switched from off to on, the controller acquires the initial position on the basis of the detection result of the sensor.

Therefore, when the main switch is switched from off to on, it is easy for the controller to specify the initial position. Thus, it is easy to output an alarm when the main switch is switched from off to on.

In the straddled vehicle,
it is preferable that the notification unit includes a meter unit, and the controller causes the meter unit to output an alarm.

The meter unit visually notifies a driver of an alarm. It is easy for a driver to visually recognize the meter unit. Therefore, it is easy for a driver to recognize the output of the alarm. Thus, it is easy to notify a driver of the alarm.

In the straddled vehicle,
it is preferable that the meter unit includes a warning display unit displaying an abnormality of the continuously variable transmission, and the controller causes the warning display unit to output an alarm.

Therefore, it is easy for a driver to recognize the abnormality of the continuously variable transmission.

In the straddled vehicle,
it is preferable that the notification unit includes a sound output unit, and the controller causes the sound output unit to output an alarm.

The sound output unit notifies a driver of an alarm through hearing. Therefore, it is easy to notify a driver of the alarm.

In the straddled vehicle,
it is preferable that the controller stops the alarm.

Therefore, it is easy to notify the alarm in an appropriate period.

In the straddled vehicle,
it is preferable that the controller stops the alarm when at least one of a first condition that the shift position becomes the LOW position and a second condition that a predetermined time elapses after the alarm is output is satisfied.

The controller stops the alarm when at least one of the first condition and the second condition is satisfied. The first condition is that the shift position becomes the LOW position. The second condition is that a predetermined time elapses after the alarm is output. Therefore, it is easy to stop the alarm at an appropriate timing.

In the straddled vehicle,
it is preferable that the controller includes a storage unit, and the storage unit stores a final position, which is the shift position at time when the main switch is switched from on to off.

The storage unit stores a final position. The final position is the shift position at time when the main switch is switched from on to off. Therefore, it is easy to accumulate information on the final position.

In the straddled vehicle,
it is preferable that the storage unit stores the final position when the main switch is switched from on to off.

Therefore, the storage unit stores the final position at an appropriate timing. Thus, it is easy to store the final position.

In the straddled vehicle,
it is preferable that the storage unit stores the final position together with a time when the main switch is switched from on to off.

The storage unit stores the final position together with the time. The information including the final position and the time corresponds to an operation history for stopping the straddled vehicle. Therefore, it is easy to accumulate the operation history.

In the straddled vehicle,
it is preferable that when the final position is at a position other than the LOW position, the controller sets a determined flag, and the storage unit stores the determined flag.

Therefore, it is easy to relatively reduce the amount of information indicating that the final position is at a position other than the LOW position.

In the straddled vehicle,
it is preferable that the storage unit stores the final position when the main switch is switched from on to off, and then the controller cuts off the power supply of the controller.

Therefore, when the main switch is switched from on to off, the controller does not cut off the power supply of the controller before the storage unit stores the final position. That is, when the main switch is switched from on to off, the controller operates until the storage unit stores the final position. Thus, it is easy to store the final position.

In the straddled vehicle,
it is preferable that the controller includes an interface unit for outputting information stored in the storage unit to an external device.

Therefore, it is easy to output the final position stored in the storage unit to the external device.

### Brief description of the drawings

For the purpose of illustrating the invention, there are shown in the drawings several forms which are presently preferred, it being understood, however, that the invention is not limited to the precise arrangement and instrumentalities shown.
Fig. 1 is a left side view of a straddled vehicle according to an embodiment.
Fig. 2 is a schematic diagram illustrating a configuration of a continuously variable transmission.
Fig. 3 is a schematic diagram illustrating the configuration of the continuously variable transmission.
Fig. 4 is a block diagram of a control system of the straddled vehicle.
Fig. 5 is a view illustrating a display screen.
Fig. 6 is a flowchart illustrating a flow of control.
Fig. 7 is a flowchart illustrating a termination process.

### Embodiments of the invention

Hereinafter, a straddled vehicle according to the present invention will be described with reference to the drawings.

### 1. Schematic configuration of straddled vehicle 1

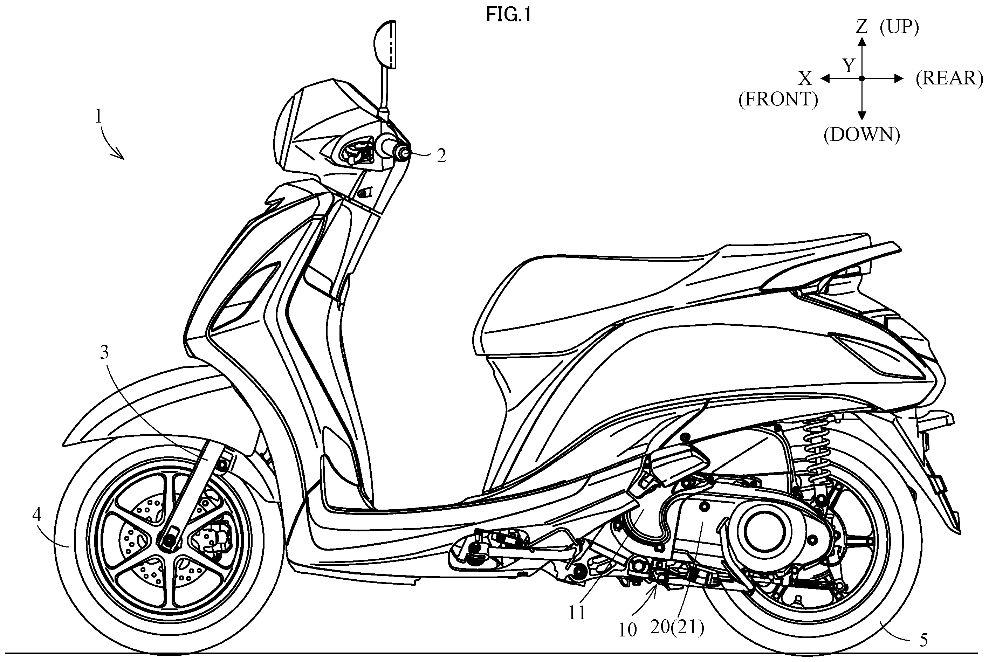

Fig. 1 is a left side view of a straddled vehicle 1 according to an embodiment. A schematic configuration of the straddled vehicle 1 will be described.

Fig. 1 illustrates a front-rear direction X, a transverse direction Y, and an up-down direction Z of the straddled vehicle 1. The front-rear direction X, the transverse direction Y, and the up-down direction Z are defined with reference to a driver (also referred to as a rider) mounted on the straddled vehicle 1. The front-rear direction X, the transverse direction Y, and the up-down direction Z are orthogonal to each other. The front-rear direction X and the transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the front-rear direction X but also directions close to the front-rear direction X. The directions close to the front-rear direction X are, for example, directions at angles of 45 degrees or less to the front-rear direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

The straddled vehicle 1 includes a handlebar 2, a front fork 3, and a front wheel 4. The front fork 3 is connected to the handlebar 2. The front fork 3 extends downward and forward from the handlebar 2. The front wheel 4 is supported by a lower portion of the front fork 3. The front wheel 4 is rotatable with respect to the front fork 3.

The straddled vehicle 1 includes a power unit 10 and a rear wheel 5. The power unit 10 is supported by a vehicle body frame (not illustrated). The power unit 10 swings with respect to the vehicle body frame. The power unit 10 extends rearward from the vehicle body frame. The rear wheel 5 is supported by the power unit 10. The rear wheel 5 is supported by the rear portion of the power unit 10. The power unit 10 rotationally drives the rear wheel 5.

The power unit 10 includes an engine 11. The engine 11 generates power. The power of the engine 11 is, for example, rotational power.

The power unit 10 includes a continuously variable transmission 21. The continuously variable transmission 21 transmits the power of the engine 11 to the rear wheel 5.

The power unit 10 includes a transmission case 20. The transmission case 20 houses the continuously variable transmission 21. The continuously variable transmission 21 is installed inside the transmission case 20.

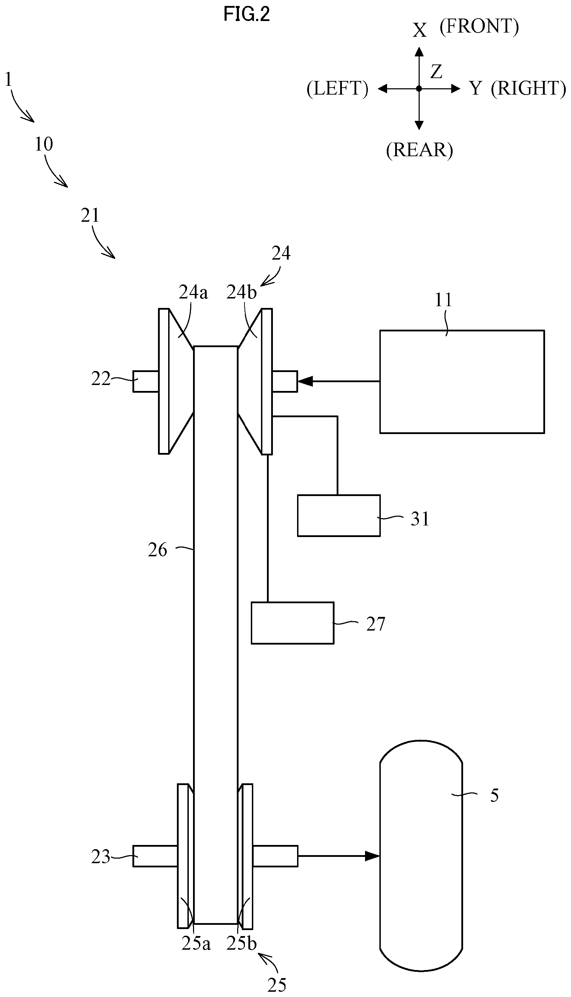

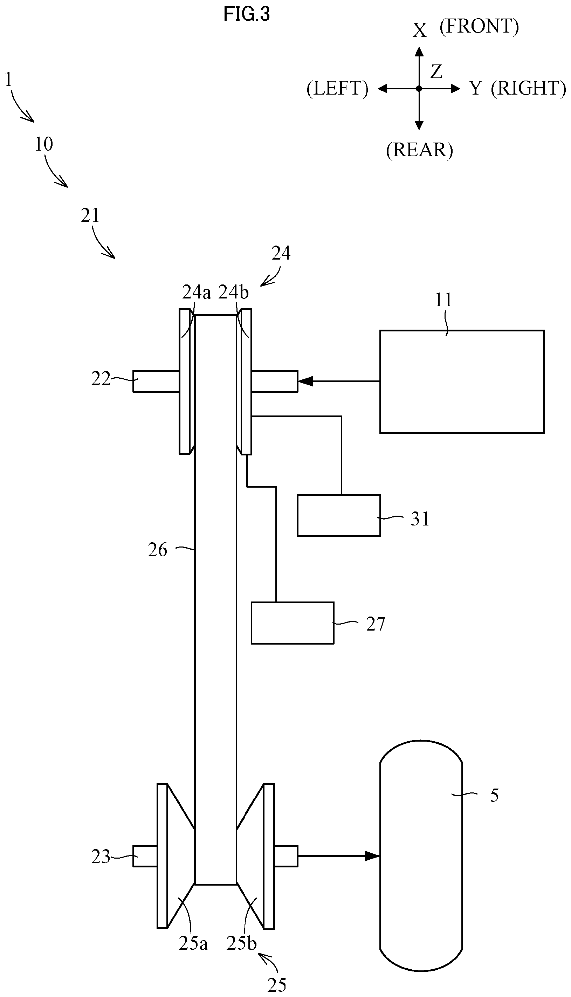

Figs. 2 and 3 are schematic diagrams illustrating the configuration of the continuously variable transmission 21.

The continuously variable transmission 21 includes a primary shaft 22. The primary shaft 22 is directly or indirectly connected to the engine 11. For example, the engine 11 includes a crankshaft (not illustrated). The primary shaft 22 is connected to the crankshaft. The primary shaft 22 is located coaxially with the crankshaft. The primary shaft 22 is rotated by the power of the engine 11. The primary shaft 22 rotates about an axis of the primary shaft 22.

The continuously variable transmission 21 includes a secondary shaft 23. The rotational power of the primary shaft 22 is transmitted to the secondary shaft 23. The secondary shaft 23 is rotated by the rotational power of the primary shaft 22. The secondary shaft 23 rotates about an axis of the secondary shaft 23. The secondary shaft 23 is directly or indirectly connected to the rear wheel 5. The rotational power of the secondary shaft 23 is transmitted to the rear wheel 5. The rear wheel 5 is rotated by the rotational power of the secondary shaft 23.

When the continuously variable transmission 21 transmits the rotational power from the primary shaft 22 to the secondary shaft 23, the continuously variable transmission 21 changes the speed change ratio. The speed change ratio is, for example, a ratio of the rotational speed of the primary shaft 22 and the rotational speed of the secondary shaft 23. When the rotational speed of the primary shaft 22 is constant, the rotational speed of the secondary shaft 23 decreases as the speed change ratio increases. When the rotational speed of the primary shaft 22 is constant, the rotational speed of the secondary shaft 23 increases as the speed change ratio decreases.

The continuously variable transmission 21 includes a primary pulley 24, a secondary pulley 25, and a belt 26. The primary pulley 24 is attached to the primary shaft 22. The primary pulley 24 rotates integrally with the primary shaft 22. The primary pulley 24 rotates about an axis of the primary shaft 22. The primary pulley 24 has a variable effective diameter. The secondary pulley 25 is attached to the secondary shaft 23. The secondary pulley 25 rotates integrally with the secondary shaft 23. The secondary pulley 25 rotates about an axis of the secondary shaft 23. The secondary pulley 25 has a variable effective diameter. The belt 26 is hung on the primary pulley 24 and the secondary pulley 25. The belt 26 travels between the primary pulley 24 and the secondary pulley 25. When the effective diameter of the primary pulley 24 increases, the effective diameter of the secondary pulley 25 decreases. When the effective diameter of the primary pulley 24 decreases, the effective diameter of the secondary pulley 25 increases.

The primary pulley 24 includes, for example, a first sheave 24a and a second sheave 24b. The first sheave 24a has, for example, a conical shape. The second sheave 24b has, for example, a conical shape. Each of the first sheave 24a and the second sheave 24b is attached to the primary shaft 22. The first sheave 24a rotates integrally with the primary shaft 22. The first sheave 24a rotates about an axis of the primary shaft 22. The second sheave 24b rotates integrally with the primary shaft 22. The second sheave 24b rotates about an axis of the primary shaft 22. The belt 26 is located between the first sheave 24a and the second sheave 24b. The belt 26 has a V-shaped cross section. The effective diameter of the primary pulley 24 depends on a separation distance between the first sheave 24a and the second sheave 24b on the axis of the primary shaft 22. The separation distance between the first sheave 24a and the second sheave 24b is variable. When the separation distance between the first sheave 24a and the second sheave 24b changes, the effective diameter of the primary pulley 24 changes.

At least one of the first sheave 24a and the second sheave 24b is movable along the axis of the primary shaft 22 with respect to the primary shaft 22. For example, the first sheave 24a is not movable along the axis of the primary shaft 22 with respect to the primary shaft 22. The first sheave 24a is fixed to the primary shaft 22. The second sheave 24b is movable along the axis of the primary shaft 22 with respect to the primary shaft 22.

The secondary pulley 25 has a structure similar to the structure of the primary pulley 24. For example, the secondary pulley 25 includes a first sheave 25a and a second sheave 25b. The first sheave 25a corresponds to the first sheave 24a. The second sheave 25b corresponds to the second sheave 24b. A relationship among the secondary shaft 23, the first sheave 25a, and the second sheave 25b is similar to a relationship among the primary shaft 22, the first sheave 24a, and the second sheave 24b.

The speed change ratio of the continuously variable transmission 21 depends on the shift position of the continuously variable transmission 21.

The shift position includes a LOW position and a position other than the LOW position.

In Fig. 2, the shift position is at the LOW position.

In Fig. 3, the shift position is at a position other than the LOW position.

A relationship between the speed change ratio and the shift position will be described. When the shift position is at the LOW position, the speed change ratio of the continuously variable transmission is the largest. The speed change ratio when the shift position is at a position other than the LOW position is smaller than the speed change ratio when the shift position is at the LOW position. When the rotational speed of the primary shaft 22 is constant, the rotational speed of the secondary shaft 23 when the shift position is at the LOW position is smaller than the rotational speed of the secondary shaft 23 when the shift position is at a position other than the LOW position.

When the shift position is at a TOP position, the speed change ratio of the continuously variable transmission is the smallest. The speed change ratio when the shift position is at a position other than the TOP position is larger than the speed change ratio when the shift position is at the TOP position. When the rotational speed of the primary shaft 22 is constant, the rotational speed of the secondary shaft 23 when the shift position is at the TOP position is larger than the rotational speed of the secondary shaft 23 when the shift position is at a position other than the TOP position.

When the engine 11 starts, the rotational speed of the secondary shaft 23 is preferably low. Therefore, when the engine 11 starts, the shift position is preferably at the LOW position.

When the straddled vehicle 1 travels, the rotational speed of the secondary shaft 23 is relatively large. Therefore, when the straddled vehicle 1 travels, the shift position is often at a position other than the LOW position.

The shift position is, for example, the position of the primary pulley 24. For example, when the shift position is at the LOW position, the effective diameter of the primary pulley 24 is minimum. Note that, even when the effective diameter of the primary pulley 24 is minimum, the belt 26 is hung on the primary pulley 24. In other words, even when the effective diameter of the primary pulley 24 is minimum, the belt 26 is not hung on the primary shaft 22. Even when the effective diameter of the primary pulley 24 is minimum, the effective diameter of the primary pulley 24 is set such that the belt 26 is not hung on the primary shaft 22.

The shift position is, for example, the position of the second sheave 24b. More specifically, the shift position is the position of the second sheave 24b in the axial direction of the primary shaft 22. For example, when the shift position is at the LOW position, the separation distance between the first sheave 24a and the second sheave 24b is maximum. Note that, even when the separation distance between the first sheave 24a and the second sheave 24b is maximum, the belt 26 is hung on the first sheave 24a and the second sheave 24b. In other words, even when the separation distance between the first sheave 24a and the second sheave 24b is maximum, the belt 26 is not hung on the primary shaft 22. Even when the separation distance between the first sheave 24a and the second sheave 24b is maximum, the movable range of the second sheave 24b is set such that the belt 26 is not hung on the primary shaft 22.

Alternatively, the shift position of the continuously variable transmission 21 is the position of the secondary pulley 25. For example, when the shift position is at the LOW position, the effective diameter of the secondary pulley 25 is maximum. Note that, even when the effective diameter of the secondary pulley 25 is maximum, the belt 26 is hung on the secondary pulley 25. In other words, even when the effective diameter of the secondary pulley 25 is maximum, the belt 26 is not detached from the secondary pulley 25. Even when the effective diameter of the secondary pulley 25 is maximum, the effective diameter of the secondary pulley 25 is set such that the belt 26 is not detached from the secondary pulley 25.

The shift position is, for example, the position of the second sheave 25b. More specifically, the shift position is the position of the second sheave 25b in the axial direction of the secondary shaft 23. For example, when the shift position is at the LOW position, the separation distance between the first sheave 25a and the second sheave 25b is the smallest. Note that, even when the separation distance between the first sheave 25a and the second sheave 25b is the smallest, the belt 26 is hung on the first sheave 25a and the second sheave 25b. In other words, even when the separation distance between the first sheave 25a and the second sheave 25b is the smallest, the belt 26 is not detached from the first sheave 25a and the second sheave 25b. Even when the separation distance between the first sheave 25a and the second sheave 25b is the smallest, the movable range of the second sheave 25b is set such that the belt 26 is not detached from the first sheave 25a and the second sheave 25b.

Refer to Fig. 3. For example, the effective diameter of the primary pulley 24 when the shift position is at a position other than the LOW position is larger than the effective diameter of the primary pulley 24 when the shift position is at the LOW position. For example, the separation distance between the first sheave 24a and the second sheave 24b when the shift position is at a position other than the LOW position is smaller than the separation distance between the first sheave 24a and the second sheave 24b when the shift position is at the LOW position. For example, the effective diameter of the secondary pulley 25 when the shift position is at a position other than the LOW position is smaller than the effective diameter of the secondary pulley 25 when the shift position is at the LOW position. The separation distance between the first sheave 25a and the second sheave 25b when the shift position is at a position other than the LOW position is larger than the separation distance between the first sheave 25a and the second sheave 25b when the shift position is at the LOW position.

For example, when the shift position is at the TOP position, the effective diameter of the primary pulley 24 is maximum. Note that, even when the effective diameter of the primary pulley 24 is maximum, the belt 26 is hung on the primary pulley 24. In other words, even when the effective diameter of the primary pulley 24 is maximum, the belt 26 is not detached from the primary pulley 24. Even when the effective diameter of the primary pulley 24 is maximum, the effective diameter of the primary pulley 24 is set such that the belt 26 is not detached from the primary pulley 24.

For example, when the shift position is at the TOP position, the separation distance between the first sheave 24a and the second sheave 24b is the smallest. Note that, even when the separation distance between the first sheave 24a and the second sheave 24b is the smallest, the belt 26 is hung on the first sheave 24a and the second sheave 24b. In other words, even when the separation distance between the first sheave 24a and the second sheave 24b is the smallest, the belt 26 is not detached from the first sheave 24a and the second sheave 24b. Even when the separation distance between the first sheave 24a and the second sheave 24b is the smallest, the movable range of the second sheave 24b is set such that the belt 26 is not detached from the first sheave 24a and the second sheave 24b.

For example, when the shift position is at the TOP position, the effective diameter of the secondary pulley 25 is minimum. Note that, even when the effective diameter of the secondary pulley 25 is minimum, the belt 26 is hung on the secondary pulley 25. In other words, even when the effective diameter of the secondary pulley 25 is minimum, the belt 26 is not hung on the secondary shaft 23. Even when the effective diameter of the secondary pulley 25 is minimum, the effective diameter of the secondary pulley 25 is set such that the belt 26 is not hung on the secondary shaft 23.

For example, when the shift position is at the TOP position, the separation distance between the first sheave 25a and the second sheave 25b is maximum. Note that, even when the separation distance between the first sheave 25a and the second sheave 25b is maximum, the belt 26 is hung on the first sheave 25a and the second sheave 25b. In other words, even when the separation distance between the first sheave 25a and the second sheave 25b is maximum, the belt 26 is not hung on the secondary shaft 23. Even when the separation distance between the first sheave 25a and the second sheave 25b is maximum, the movable range of the second sheave 25b is set such that the belt 26 is not hung on the secondary shaft 23.

The power unit 10 includes an electric motor 31. The electric motor 31 changes the shift position of the continuously variable transmission 21. The electric motor 31 is directly or indirectly connected to the continuously variable transmission 21.

For example, the electric motor 31 changes the effective diameter of the primary pulley 24. The electric motor 31 is directly or indirectly connected to the primary pulley 24.

For example, the electric motor 31 changes the separation distance between the first sheave 24a and the second sheave 24b in the axis of the primary shaft 22. The electric motor 31 moves the second sheave 24b along the axis of the primary shaft 22 with respect to the primary shaft 22. The electric motor 31 is directly or indirectly connected to the second sheave 24b.

The power unit 10 includes a shift position sensor 27. The shift position sensor 27 detects the shift position of the continuously variable transmission 21. For example, the shift position sensor 27 detects the position of the primary pulley 24. For example, the shift position sensor 27 detects the position of the second sheave 24b. The shift position sensor 27 detects the position of the second sheave 24b in the axial direction of the primary shaft 22. For example, the shift position sensor 27 is directly or indirectly connected to the continuously variable transmission 21. For example, the shift position sensor 27 is directly or indirectly connected to the primary pulley 24. For example, the shift position sensor 27 is directly or indirectly connected to the second sheave 24b of the primary pulley 24.

The shift position sensor 27 corresponds to the sensor of the present invention.

### 2. Control system of straddled vehicle 1

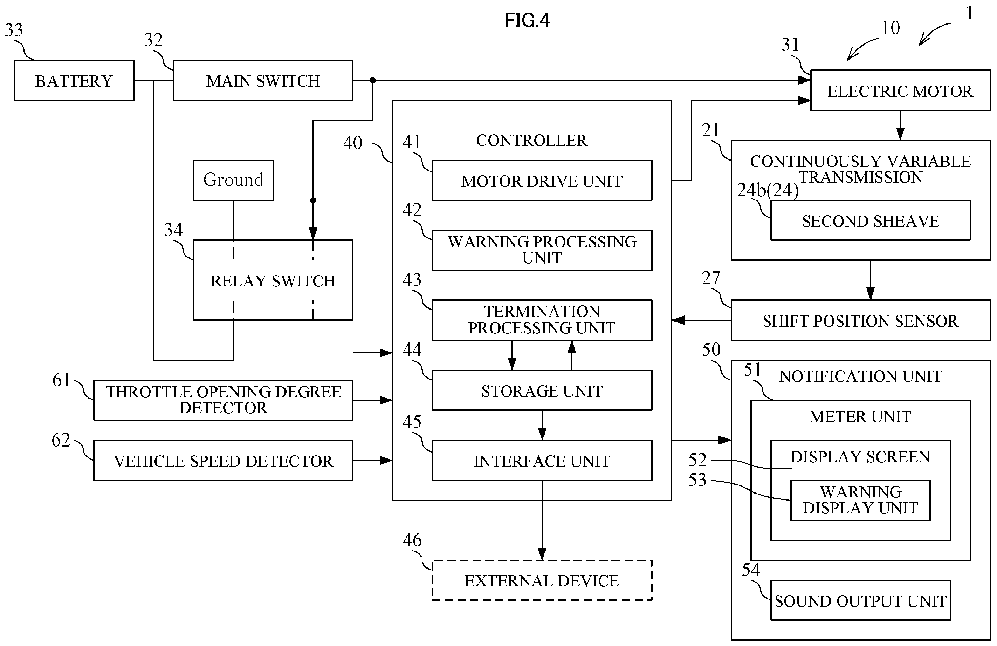

A control system of the straddled vehicle 1 will be described. Fig. 4 is a block diagram of a control system of the straddled vehicle 1.

The straddled vehicle 1 includes a main switch 32. The main switch 32 is switched between on for turning on the power supply of the electric motor 31 and off for turning off the power supply of the electric motor 31. When the main switch 32 is switched from off to on, the power supply of the electric motor 31 is turned on. When the main switch 32 is switched from on to off, the power supply of the electric motor 31 is turned off. The main switch 32 is electrically connected to the electric motor 31.

The main switch 32 is operated, for example, by an operation of a driver. Although the main switch 32 is not illustrated in Fig. 1, the main switch 32 is provided below the handlebar 2, for example.

When the main switch 32 is on, the electric motor 31 changes the shift position of the continuously variable transmission 21. When the main switch 32 is on, the shift position of the continuously variable transmission 21 is variable.

When the main switch 32 is off, the electric motor 31 cannot change the shift position of the continuously variable transmission 21. When the main switch 32 is off, the shift position of the continuously variable transmission 21 is fixed.

The shift position includes a final position. The final position is the shift position at time when the main switch 32 is switched from on to off. When the main switch 32 is off, the shift position is held at the final position. The final position may be at the LOW position. Alternatively, the final position may be at a position other than the LOW position.

The shift position includes an initial position. The initial position is the shift position at time when the main switch 32 is switched from off to on. The initial position is substantially the same as the final position. The initial position may be at the LOW position. Alternatively, the initial position may be at a position other than the LOW position.

The straddled vehicle 1 includes a battery 33. The battery 33 is electrically connected to the main switch 32. The battery 33 is electrically connected to the electric motor 31 via the main switch 32. When the main switch 32 is on, the battery 33 supplies power to the electric motor 31. When the main switch 32 is switched from off to on, the battery 33 starts the supply of power to the electric motor 31. When the main switch 32 is off, the battery 33 does not supply power to the electric motor 31. When the main switch 32 is switched from on to off, the battery 33 stops the supply of power to the electric motor 31.

The straddled vehicle 1 includes a controller 40. The controller 40 acquires a detection result of the shift position sensor 27. The controller 40 acquires a shift position of the continuously variable transmission 21 on the basis of the detection result of the shift position sensor 27. The controller 40 is electrically connected to the shift position sensor 27.

The controller 40 is connected to the electric motor 31. The controller 40 controls the electric motor 31 to change the shift position of the continuously variable transmission 21.

The controller 40 is electrically connected to the main switch 32. The controller 40 is connected to the battery 33 via the main switch 32.

The straddled vehicle 1 includes a relay switch 34. The relay switch 34 is electrically connected to the battery 33. The relay switch 34 is electrically connected to the controller 40. The relay switch 34 is controlled by the controller 40.

The relay switch 34 functions as a self-holding circuit of the controller 40. For example, when the main switch 32 is on, the main switch 32 causes power to be supplied to the controller 40. When the main switch 32 is switched from on to off, the relay switch 34 causes power to be supplied to the controller 40. Therefore, when the main switch 32 is switched from on to off, the power supply of the controller 40 is not turned off. When the relay switch 34 is off, the power supply of the controller 40 is turned off.

The straddled vehicle 1 includes a notification unit 50. The notification unit 50 outputs an alarm. The notification unit 50 notifies a driver of an alarm.

The notification unit 50 is electrically connected to the controller 40. The notification unit 50 receives information from the controller 40. The information received by the notification unit 50 from the controller 40 relates to an alarm. The notification unit 50 outputs an alarm on the basis of the information from the controller 40.

For example, when the initial position is at a position other than the LOW position, the notification unit 50 outputs an alarm. For example, when the main switch 32 is switched from off to on, the notification unit 50 outputs an alarm.

The notification unit 50 includes a meter unit 51. The meter unit 51 outputs an alarm.

The meter unit 51 is installed at a position where it is easy for a driver to visually recognize. Although the meter unit 51 is not illustrated in Fig. 1, the meter unit 51 is installed, for example, in front of the handlebar 2. The meter unit 51 displays the state of the straddled vehicle 1. The state of the straddled vehicle 1 is, for example, the speed of the straddled vehicle 1. The state of the straddled vehicle 1 is, for example, the rotational speed of the engine 11.

The meter unit 51 includes a display screen 52. The display screen 52 includes a warning display unit 53. The warning display unit 53 outputs an alarm. The warning display unit 53 displays an abnormality of the continuously variable transmission 21. The controller 40 causes the warning display unit 53 to display an alarm.

The display screen 52 further displays the state of the straddled vehicle 1.

The notification unit 50 includes a sound output unit 54. The sound output unit 54 outputs an alarm. The sound output unit 54 is, for example, a speaker.

A configuration example of the controller 40 will be described. The controller 40 includes a motor drive unit 41, a warning processing unit 42, a termination processing unit 43, a storage unit 44, and an interface unit 45.

The motor drive unit 41 controls the electric motor 31. The motor drive unit 41 outputs information for driving the electric motor 31 to the electric motor 31.

The warning processing unit 42 controls the notification unit 50. The warning processing unit 42 outputs a warning. The warning processing unit 42 stops a warning. The warning processing unit 42 cancels the output of the warning.

For example, the warning processing unit 42 acquires an initial position. When the main switch 32 is switched from off to on, the warning processing unit 42 acquires an initial position. The warning processing unit 42 controls the notification unit 50 on the basis of the initial position.

The termination processing unit 43 executes a termination process. When the main switch 32 is switched from on to off, the termination process is executed. The termination process includes storing the state of the straddled vehicle 1 in the storage unit 44. The termination process includes turning off the relay switch 34. In the termination process, the storage unit 44 stores the state of the straddled vehicle 1, and then the relay switch 34 is switched from on to off. When the relay switch 34 is turned off, the power supply of the controller 40 is turned off.

The storage unit 44 stores the state of the straddled vehicle 1. For example, the storage unit 44 stores the final position. For example, in the termination process, the storage unit 44 stores the final position. For example, when the main switch 32 is off from on, the storage unit 44 stores the final position.

The interface unit 45 outputs the information stored in the storage unit 44 to an external device 46. The interface unit 45 can be connected to the external device 46. The information stored in the storage unit 44 is output to the external device 46 via the interface unit 45. The external device 46 is not an element of the straddled vehicle 1. The external device 46 is provided outside the straddled vehicle 1.

The external device 46 is installed, for example, in a store of the straddled vehicle 1. When the external device 46 is connected to the interface unit 45, the external device 46 can display the information stored in the storage unit 44. Therefore, it is easy for at least one of a driver and a staff of the store to confirm the information stored in the storage unit 44. For example, it is easy to confirm the record of the final position.

The straddled vehicle 1 includes a throttle opening degree detector 61. The throttle opening degree detector 61 detects a throttle opening degree. The throttle opening degree is, for example, an opening degree of a throttle valve. The throttle opening degree is, for example, an opening degree of an accelerator grip. The throttle opening degree detector 61 is electrically connected to the controller 40.

The straddled vehicle 1 includes a vehicle speed detector 62. The vehicle speed detector 62 detects the speed of the straddled vehicle 1. The vehicle speed detector 62 is electrically connected to the controller 40. The vehicle speed detector 62 transmits the detected vehicle speed to the controller 40.

The controller 40 acquires a detection result of the throttle opening degree detector 61. The controller 40 acquires a detection result of the vehicle speed detector 62. The controller 40 controls the shift position of the continuously variable transmission 21 on the basis of the detection results of the shift position sensor 27, the throttle opening degree detector 61, and the vehicle speed detector 62.

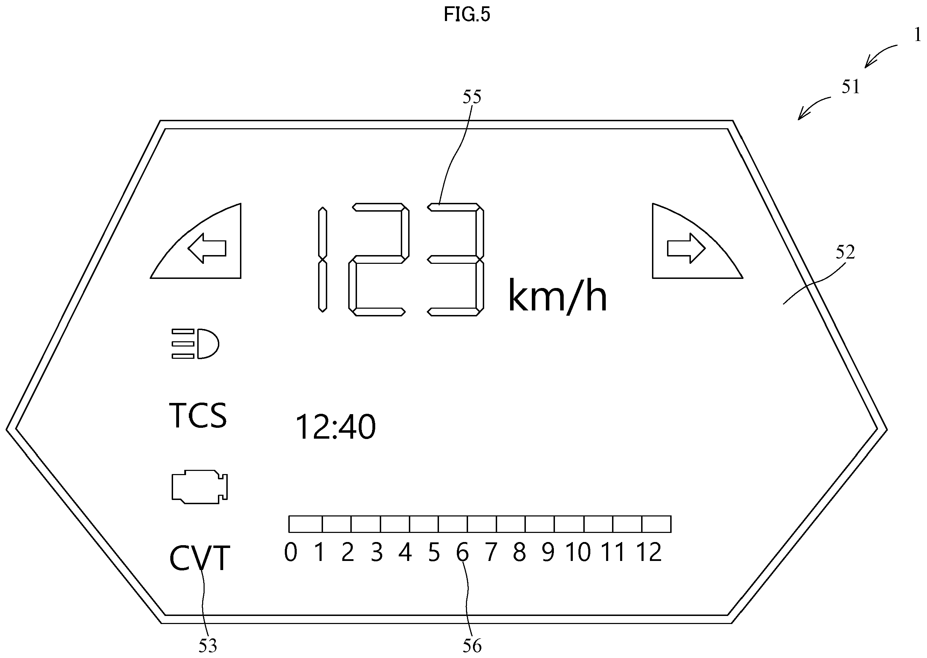

Fig. 5 is a view illustrating the display screen 52. The display screen 52 of the meter unit 51 will be described.

The display screen 52 displays the state of the straddled vehicle 1. For example, the display screen 52 includes a speed display unit 55 that indicates the speed of the straddled vehicle 1. For example, the display screen 52 includes a rotational speed display unit 56 that indicates the rotational speed of the engine 11.

As described above, the display screen 52 includes the warning display unit 53. The warning display unit 53 notifies the abnormality of the continuously variable transmission 21. For example, when the continuously variable transmission 21 has a system abnormality, the warning display unit 53 lights up. For example, when the initial position is at a position other than the LOW position, the warning display unit 53 blinks. For example, when the continuously variable transmission 21 is normal, the warning display unit 53 lights off.

### 3. Flow of control

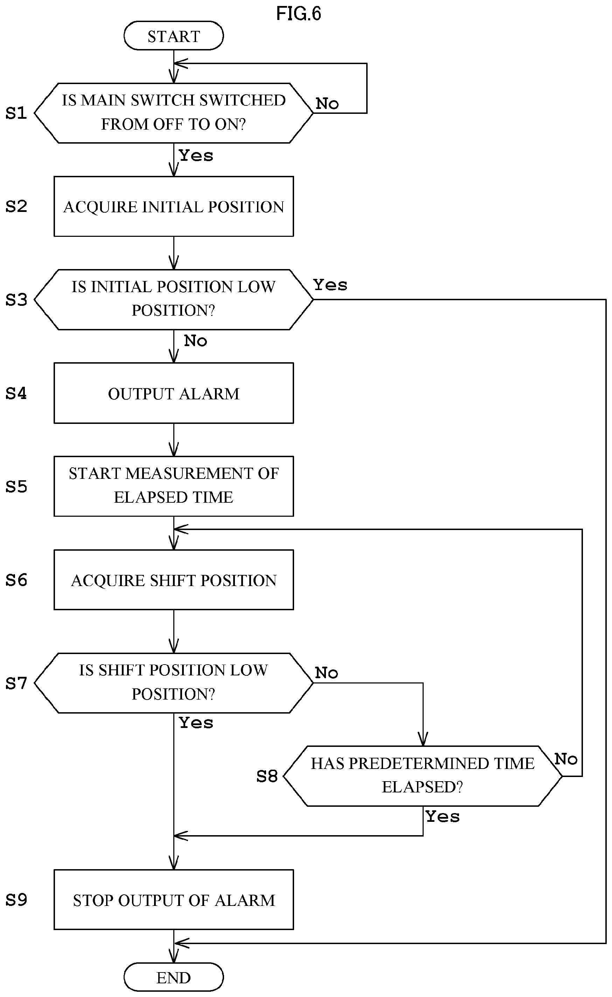

Fig. 6 is a flowchart illustrating a flow of control. A control procedure when the main switch 32 is switched from off to on will be described.

### Step S1

The controller 40 determines whether or not the main switch 32 is switched from off to on.

For example, when a state where power is not supplied to the controller 40 is changed to a state where power is supplied to the controller 40, the controller 40 determines that the main switch 32 is switched from off to on. For example, when the main switch 32 is switched from off to on, the controller 40 receives a main switch-on signal. When the main switch-on signal is received, the controller 40 determines that the main switch 32 is switched from off to on.

When the controller 40 determines that the main switch 32 is switched from off to on, the process proceeds to step S2. Otherwise, the processing in step S1 is performed again.

### Step S2

The shift position sensor 27 detects an initial position. The controller 40 acquires a detection result of the shift position sensor 27. Specifically, the controller 40 acquires an initial position.

### Step S3

The controller 40 determines whether or not the initial position is at the LOW position. When the initial position is at the LOW position, the controller 40 does not cause the notification unit 50 to output an alarm. When the initial position is at the LOW position, the controller 40 does not execute steps S4 to S9. When the initial position is at a position other than the LOW position, the process proceeds to step S4.

### Step S4

The controller 40 causes the notification unit 50 to output an alarm. For example, the controller 40 outputs information on the alarm to the notification unit 50.

For example, the controller 40 causes at least one of the meter unit 51 and the sound output unit 54 to output an alarm. For example, the controller 40 causes the warning display unit 53 to output an alarm.

The notification unit 50 outputs an alarm. For example, the meter unit 51 outputs an alarm. For example, the warning display unit 53 blinks an alarm. For example, the sound output unit 54 outputs a warning sound. Alternatively, the sound output unit 54 outputs a voice message indicating that "the initial position is at a position other than the LOW position".

### Step S5

The notification unit 50 continuously outputs the alarm. The controller 40 starts measuring the elapsed time after the alarm is output. More specifically, the controller 40 starts measuring the elapsed time from the time when the alarm output is started. The elapsed time corresponds to a period during which the alarm is continuously output.

### Step S6

The notification unit 50 continuously outputs the alarm. The shift position sensor 27 detects the shift position of the continuously variable transmission 21. The shift position sensor 27 repeatedly detects the shift position of the continuously variable transmission 21. The controller 40 acquires a shift position of the continuously variable transmission 21 on the basis of the detection result of the shift position sensor 27. The shift position of the continuously variable transmission 21 acquired by the controller 40 in this step S6 corresponds to the shift position of the continuously variable transmission 21 when the alarm is output.

### Step S7

The controller 40 determines whether or not the shift position of the continuously variable transmission 21 becomes the LOW position. Specifically, the controller 40 determines whether or not the shift position of the continuously variable transmission 21 is changed from a position other than the LOW position to the LOW position.

The fact that the shift position of the continuously variable transmission 21 becomes the LOW position is an example of the first condition of the present invention.

When the shift position of the continuously variable transmission 21 becomes the LOW position, the process proceeds to step S9. In other words, when the first condition is satisfied, the process proceeds to step S9. When the shift position of the continuously variable transmission 21 is still at a position other than the LOW position, the process proceeds to step S8.

### Step S8

The controller 40 determines whether or not the elapsed time exceeds a predetermined time. The predetermined time is, for example, 5 seconds.

The face that the elapsed time exceeds the predetermined time is synonymous with the fact that the predetermined time elapses after the alarm is output.

The fact that the predetermined time elapses after the alarm is output is an example of the second condition of the present invention.

When the predetermined time has elapsed since the alarm was output, the process proceeds to step S9. In other words, when the second condition is satisfied, the process proceeds to step S9. Otherwise, the processing in step S6 is executed again.

### Step S9

The controller 40 stops the alarm. Specifically, the controller 40 stops the output of the alarm from the notification unit 50.

For example, the controller 40 stops outputting the information on the alarm to the notification unit 50. Alternatively, the controller 40 outputs information on the stop of the alarm to the notification unit 50.

The notification unit 50 stops the alarm.

The processing in step S4 described above is executed only when the initial position is at a position other than the LOW position. Specifically, when the initial position is at a position other than the LOW position, the controller 40 outputs an alarm. When the initial position is at the LOW position, the controller 40 does not output an alarm.

The processing in steps S5 to S9 described above is for determining the timing to stop the alarm. The processing in steps S5 to S9 is also executed only when the initial position is at a position other than the LOW position. Specifically, when the initial position is at a position other than the LOW position, the controller 40 continues the alarm until at least one of the first condition and the second condition is satisfied. When the initial position is at a position other than the LOW position, the timing to stop the alarm is when at least one of the first condition and the second condition is satisfied.

When the processing in steps S1 to S9 described above is executed, the engine 11 is preferably stopped. It is preferable that the processing in steps S1 to S9 described above is executed before the engine 11 starts.

### 4. Termination process

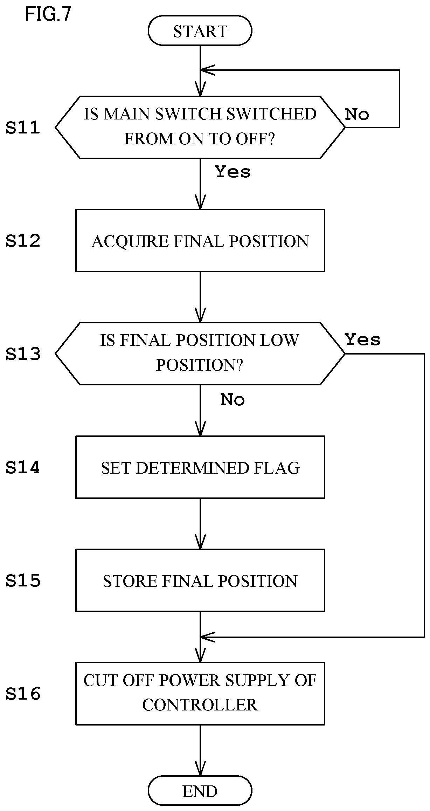

Fig. 7 is a flowchart illustrating a procedure of a termination process. The flow of the termination process will be described. The termination process is a process when the main switch 32 is switched from on to off.

### Step S11

The controller 40 determines whether or not the main switch 32 is switched from on to off.

For example, when the main switch 32 is switched from on to off, the controller 40 receives a main switch-off signal. When the main switch-off signal is received, the controller 40 determines that the main switch 32 is switched from on to off.

Here, when the main switch 32 is switched from on to off, the power supply of the electric motor 31 is immediately turned off. When the main switch 32 is switched from on to off, the electric motor 31 immediately stops. When the main switch 32 is switched from on to off, the shift position is held at the final position.

When the main switch 32 is switched from on to off, the power supply of the controller 40 is not immediately turned off. Even after the main switch 32 is switched from on to off, the relay switch 34 causes power to be supplied to the controller 40 so that the controller 40 continuously operates.

When the controller 40 determines that the main switch 32 is switched from on to off, the process proceeds to step S12. Otherwise, the processing in step S11 is performed again.

### Step S12

The shift position sensor 27 detects a final position. The controller 40 acquires a detection result of the shift position sensor 27. Specifically, the controller 40 acquires a final position.

### Step S13

The controller 40 determines whether or not the final position is at the LOW position. When the final position is at the LOW position, the process proceeds to step S16. When the final position is at a position other than the LOW position, the process proceeds to step S14.

### Step S14

The controller 40 sets a determined flag. The "determined flag" is a flag indicating that the final position is at a position other than the LOW position.

### Step S15

The storage unit 44 stores the final position. For example, the storage unit 44 may store information specifying the final position. For example, the storage unit 44 may store the determined flag.

For example, the storage unit 44 may store the final position together with a time when the main switch 32 is switched from on to off. The storage unit 44 may store the determined flag together with a time when the main switch 32 is off.

### Step S16

The relay switch 34 is switched from on to off. For example, the controller 40 stops the power output to the relay switch 34.

The relay switch 34 turns off the power supply of the controller 40. The relay switch 34 cuts off the power supply of the controller 40. The controller 40 stops.

### 5. Effects of embodiment

The straddled vehicle 1 includes an engine 11, a continuously variable transmission 21, an electric motor 31, a shift position sensor 27, a controller 40, a main switch 32, and a notification unit 50. The engine 11 generates power. The continuously variable transmission 21 transmits the power of the engine 11 to the rear wheel 5. The electric motor 31 changes the shift position of the continuously variable transmission 21. The shift position sensor 27 detects the shift position of the continuously variable transmission 21. The controller 40 acquires a detection result of the shift position sensor 27. The main switch 32 is switched between on for turning on the power supply of the electric motor 31 and off for turning off the power supply of the electric motor 31. The notification unit 50 is electrically connected to the controller 40. The notification unit 50 receives information from the controller 40. When an initial position is at a position other than the LOW position, the controller 40 causes the notification unit 50 to output an alarm. The initial position is the shift position at time when the main switch 32 is switched from off to on. After the main switch 32 is switched from off to on, the engine 11 starts. The initial position is substantially the same as the shift position at time when the engine 11 starts. Therefore, it is easy to notify a driver that the engine 11 starts at a position, which is the shift position of the continuously variable transmission 21, other than the LOW position.

Normally, when the engine 11 starts, the shift position of the continuously variable transmission 21 is at the LOW position. Therefore, when the engine 11 starts at a position, which is the shift position of the continuously variable transmission 21, other than the LOW position, the ride comfort of the straddled vehicle 1 for a driver may change. In this embodiment, when the initial position is at a position other than the LOW position, the controller 40 causes the notification unit 50 to output an alarm. Therefore, it is easy to notify a driver in advance that the ride comfort of the straddled vehicle 1 may change.

When the main switch 32 is switched from off to on, the controller 40 acquires an initial position on the basis of the detection result of the shift position sensor 27. Therefore, when the main switch 32 is switched from off to on, it is easy for the controller 40 to specify the initial position. Thus, it is easy to output an alarm when the main switch 32 is switched from off to on. As a result, it is easy to output an alarm before the engine 11 starts.

For example, when the main switch 32 is switched from off to on, the controller 40 receives a main switch-on signal. Therefore, when the main switch 32 is switched from off to on, it is easy for the controller 40 to acquire the initial position.

The notification unit 50 includes a meter unit 51. The controller 40 causes the meter unit 51 to output an alarm. The meter unit 51 visually notifies a driver of an alarm. It is easy for a driver to visually recognize the meter unit 51. Therefore, it is easy for a driver to recognize the output of the alarm. Thus, it is easy to notify a driver of the alarm.

The meter unit 51 includes the warning display unit 53 displaying an abnormality of the continuously variable transmission 21. The controller 40 causes the warning display unit 53 to output an alarm. Therefore, it is easy for a driver to recognize the abnormality of the continuously variable transmission 21.

The notification unit 50 includes a sound output unit 54. The controller 40 causes the sound output unit 54 to output an alarm. The sound output unit 54 notifies a driver of an alarm through hearing. Therefore, it is easy to notify a driver of the alarm.

The controller 40 stops the alarm. Therefore, it is easy to notify the alarm in an appropriate period.

The controller 40 stops the alarm when at least one of the first condition and the second condition is satisfied. The first condition is that the shift position becomes the LOW position. The second condition is that a predetermined time elapses after the alarm is output. Therefore, it is easy to stop the alarm at an appropriate timing.

When the initial position is at a position other than the LOW position, the controller 40 continues outputting of the alarm until at least one of the first condition and the second condition is satisfied. When the initial position is at a position other than the LOW position, the timing to stop the alarm is when at least one of the first condition and the second condition is satisfied. Therefore, it is easy to stop the alarm at an appropriate timing.

The controller 40 includes the storage unit 44. The storage unit 44 stores the final position. The final position is the shift position at time when the main switch 32 is switched from on to off. Therefore, it is easy to accumulate information on the final position.

When the final position is at a position other than the LOW position, the storage unit 44 stores the final position. Therefore, it is easy to store the final position located at a position other than the LOW position. In other words, it is easy to store the final position not located at the LOW position.

The storage unit 44 stores the final position when the main switch 32 is switched from on to off. Therefore, the storage unit 44 stores the final position at an appropriate timing. Thus, it is easy to store the final position.

The storage unit 44 stores the final position together with a time when the main switch 32 is switched from on to off. The storage unit 44 stores the final position together with the time. The information including the final position and the time corresponds to an operation history for stopping the straddled vehicle 1. Therefore, it is easy to accumulate the operation history.

When the final position is at a position other than the LOW position, the controller 40 sets a determined flag, and the storage unit 44 stores the determined flag. Therefore, it is easy to relatively reduce the amount of information indicating that the final position is at a position other than the LOW position.

When the main switch 32 is switched from on to off, the storage unit 44 stores a final position, and then the controller 40 cuts off the power supply of the controller 40. Therefore, when the main switch 32 is switched from on to off, the controller 40 does not cut off the power supply of the controller 40 before the storage unit 44 stores the final position. That is, when the main switch 32 is switched from on to off, the controller 40 operates until the storage unit 44 stores the final position. Thus, it is easy to store the final position.

The controller 40 includes the interface unit 45 for outputting the information stored in the storage unit 44 to the external device 46. Therefore, it is easy to output the final position stored in the storage unit 44 to the external device 46.

When the interface unit 45 outputs the final position to the external device 46, it is easy to confirm the record of the final position. When the interface unit 45 outputs the final position to the external device 46, it is easy to check the operation history. Thus, it is easy to confirm the shift position at time when the main switch 32 is switched from on to off.

### 6. Modified embodiments

This invention is not limited to the above embodiment, and can be modified as follows.
(1) The timing for outputting the alarm is not limited to when the main switch 32 is switched from off to on. For example, the timing for outputting the alarm may be when the main switch 32 is switched from on to off. According to this modified embodiment, it is also easy to notify a driver that the engine 11 starts at a position, which is the shift position of the continuously variable transmission 21, other than the LOW position.
   For example, when the final position is at a position other than the LOW position, the timing for outputting the alarm is when the main switch 32 is switched from on to off. According to the modified embodiment, it is easy to notify a driver that the engine 11 is started at a position, which is the shift position of the continuously variable transmission 21, other than the LOW position at an earlier stage.
(2) The alarm is not limited to a visual alarm or an audible alarm. The alarm may be an oscillatory alarm. The notification unit 50 may output an alarm by vibration.
(3) In the embodiment, when the final position is at the LOW position, the storage unit 44 does not store the final position. However, even when the final position is at the LOW position, the storage unit 44 may store the final position. Regardless of whether or not the final position is at the LOW position, the storage unit 44 may store the final position. When the final position is at the LOW position in step S13, the process may proceed to step S15.
(4) In the embodiment, the number of front wheels 4 is one. However, the present invention is not limited thereto. The number of front wheels 4 may be two. In the embodiment, the number of rear wheels 5 is one. The present invention is not limited thereto. The number of rear wheels 5 may be two.
(5) In the embodiment, a scooter-type vehicle as the straddled vehicle 1 has been exemplified. However, the present invention is not limited thereto. For example, the straddled vehicle 1 may be changed to vehicles of other types, such as a street type, a sport type, an off-road type, or an all-terrain vehicle.
(6) In the embodiment and each modified embodiment described in the above (1) to (5), each configuration may be appropriately changed by further replacing or combining each configuration with another modified embodiment, as long as they are in conformity with the claims.

## Claims

1. A straddled vehicle (1) comprising:
an engine (11) generating power;
a continuously variable transmission (21) transmitting the power of the engine (11) to a rear wheel (5);
an electric motor (31) changing a shift position of the continuously variable transmission (21);
a sensor (27) detecting the shift position;
a controller (40) acquiring a detection result of the sensor (27);
a main switch (32) switched between on for turning on a power supply of the electric motor (31) and off for turning off the power supply of the electric motor (31); and
a notification unit (50) electrically connected to the controller (40) and receiving information from the controller (40),
**characterized in that**,
in a case where an initial position, which is the shift position at time when the main switch (32) is switched from off to on, is at a position other than a LOW position, the controller (40) causes the notification unit (50) to output an alarm.

2. The straddled vehicle (1) according to claim 1, wherein
when the main switch (32) is switched from off to on, the controller (40) acquires the initial position on the basis of the detection result of the sensor (27).

3. The straddled vehicle (1) according to claim 1 or 2, wherein
the notification unit (50) includes a meter unit (51), and
the controller (40) causes the meter unit (51) to output an alarm.

4. The straddled vehicle (1) according to claim 3, wherein
the meter unit (51) includes a warning display unit (53) displaying an abnormality of the continuously variable transmission (21), and
the controller (40) causes the warning display unit (53) to output an alarm.

5. The straddled vehicle (1) according to claim 3 or 4, wherein
the notification unit (50) includes a sound output unit (54), and
the controller (40) causes the sound output unit (54) to output an alarm.

6. The straddled vehicle (1) according to any one of claims 1 to 5, wherein
the controller (40) stops the alarm.

7. The straddled vehicle (1) according to any one of claims 1 to 6, wherein
the controller (40) stops the alarm when at least one of a first condition that the shift position becomes the LOW position and a second condition that a predetermined time elapses after the alarm is output is satisfied.

8. The straddled vehicle (1) according to any one of claims 1 to 7, wherein
the controller (40) includes a storage unit (44), and
the storage unit (44) stores a final position, which is the shift position at time when the main switch (32) is switched from on to off.

9. The straddled vehicle (1) according to claim 8, wherein
the storage unit (44) stores the final position when the main switch (32) is switched from on to off.

10. The straddled vehicle (1) according to claim 8 or 9, wherein
the storage unit (44) stores the final position together with a time when the main switch (32) is switched from on to off.

11. The straddled vehicle (1) according to any one of claims 8 to 10, wherein
when the final position is at a position other than the LOW position, the controller (40) sets a determined flag, and the storage unit (44) stores the determined flag.

12. The straddled vehicle (1) according to any one of claims 8 to 11, wherein
the storage unit (44) stores the final position when the main switch (32) is switched from on to off, and then the controller (40) cuts off the power supply of the controller (40).

13. The straddled vehicle (1) according to any one of claims 8 to 12, wherein
the controller (40) includes an interface unit (45) for outputting information stored in the storage unit (44) to an external device (46).

## Patentansprüche

1. Spreizsitz-Fahrzeug (1) das umfasst:
einen Motor (11), der Kraft erzeugt;
ein stufenloses Getriebe (21), das die Kraft des Motors (11) auf ein hinteres Rad (5) überträgt;
einen Elektromotor (31), der eine Schaltstellung des stufenlosen Getriebes (21) ändert;
einen Sensor (27), der die Schaltstellung bestimmt;
eine Steuerungseinrichtung (40), die ein Erfassungsergebnis des Sensors (27) erfasst;
einen Hauptschalter (32), der zwischen einer Stellung zum Anschalten einer Stromversorgung des Elektromotors (31) und einer Stellung zum Abschalten der Stromzufuhr des Elektromotors (31) umgeschaltet wird; sowie
eine Benachrichtigungs-Einheit (50), die elektrisch mit der Steuerungseinrichtung (40) verbunden ist und Informationen von der Steuerungseinrichtung (40) empfängt,
**dadurch gekennzeichnet, dass**:
wenn sich eine Ausgangsstellung, die die Schalterstellung zu dem Zeitpunkt ist, zu dem der Hauptschalter (32) von abgeschaltet zu angeschaltet umgeschaltet wird, sich an einer anderen Stellung als einer Niedrig-Stellung befindet, die Steuerungseinrichtung (40) die Benachrichtigungs-Einheit (50) veranlasst, eine Warnmeldung auszugeben.

2. Spreizsitz-Fahrzeug (1) nach Anspruch 1, wobei
wenn der Hauptschalter (32) von abgeschaltet zu angeschaltet umgeschaltet wird, die Steuerungseinrichtung (40) die Ausgangsstellung auf Basis des Erfassungsergebnisses des Sensors (27) bestimmt.

3. Spreizsitz-Fahrzeug (1) nach Anspruch 1 oder 2, wobei
die Benachrichtigungs-Einheit (50) eine Anzeige-Einheit (51) einschließt, und
die Steuerungseinrichtung (40) die Anzeige-Einheit (51) veranlasst, eine Warnmeldung auszugeben.

4. Spreizsitz-Fahrzeug (1) nach Anspruch 3, wobei
die Anzeige-Einheit (51) eine Warnanzeige-Einheit (53) einschließt, die eine Störung des stufenlosen Getriebes (21) anzeigt, und
die Steuerungseinrichtung (40) die Warnanzeige-Einheit (53) veranlasst, eine Warnmeldung auszugeben.

5. Spreizsitz-Fahrzeug (1) nach Anspruch 3 oder 4, wobei
die Benachrichtigungs-Einheit (50) eine Tonausgabe-Einheit (54) einschließt, und
die Steuerungseinrichtung (40) die Tonausgabe-Einheit (54) veranlasst, eine Warnmeldung auszugeben.

6. Spreizsitz-Fahrzeug (1) nach einem der Ansprüche 1 bis 5, wobei die
Steuerungseinrichtung (40) die Warnmeldung unterbricht.

7. Spreizsitz-Fahrzeug (1) nach einem der Ansprüche 1 bis 6, wobei
die Steuerungseinrichtung (40) die Warnmeldung unterbricht, wenn eine erste Bedingung dahingehend, dass die Schalterstellung die Niedrig-Stellung einnimmt, oder/und eine zweite Bedingung dahingehend erfüllt ist/sind, dass eine vorgegebene Zeit nach Ausgeben der Warnmeldung vergeht.

8. Spreizsitz-Fahrzeug (1) nach einem der Ansprüche 1 bis 7, wobei die
Steuerungseinrichtung (40) eine Speicherungs- Einheit (44) einschließt, und
die Speicherungs-Einheit (44) eine Endstellung speichert, die die Schalterstellung zu dem Zeitpunkt ist, zu dem der Hauptschalter (32) von angeschaltet zu abgeschaltet umgeschaltet wird.

9. Spreizsitz-Fahrzeug (1) nach Anspruch 8, wobei:
die Speicherungs-Einheit (44) die Endstellung speichert, wenn der Hauptschalter (32) von angeschaltet zu abgeschaltet umgeschaltet wird.

10. Spreizsitz-Fahrzeug (1) nach Anspruch 8 oder 9, wobei
die Speicherungs-Einheit (44) die Endstellung zusammen mit einem Zeitpunkt speichert, zu dem der Hauptschalter (32) von angeschaltet zu abgeschaltet umgeschaltet wird.

11. Spreizsitz-Fahrzeug (1) nach einem der Ansprüche 8 bis 10, wobei
wenn sich die Endstellung an einer anderen Stellung als der Niedrig-Stellung befindet, die Steuerungseinrichtung (40) ein festgelegtes Flag setzt und die Speicherungs-Einheit (44) das festgelegte Flag speichert.

12. Spreizsitz-Fahrzeug (1) nach einem der Ansprüche 8 bis 11, wobei
die Speicherungs-Einheit (44) die Endstellung speichert, wenn der Hauptschalter (32) von angeschaltet zu abgeschaltet umgeschaltet wird, und dann die Steuerungseinrichtung (40) die Stromversorgung der Steuerungseinrichtung (40) unterbricht.

13. Spreizsitz-Fahrzeug (1) nach einem der Ansprüche 8 bis 12, wobei
die Steuerungs-Einheit (40) eine Schnittstellen-Einheit (45) zum Ausgeben von in der Speicherungs-Einheit (44) gespeicherten Informationen an eine externe Vorrichtung (46) einschließt.

## Revendications

1. Véhicule à enfourcher (1) comprenant :
un moteur thermique (11) générant de la puissance ;
une transmission à variation continue (21) transmettant la puissance du moteur thermique (11) à une roue arrière (5) ;
un moteur électrique (31) changeant une position de changement de vitesse de la transmission à variation continue (21) ;
un capteur (27) détectant la position de changement de vitesse ;
un dispositif de commande (40) qui acquiert un résultat de détection du capteur (27) ; un commutateur principal (32) commuté entre une position marche pour mettre sous tension une alimentation électrique du moteur électrique (31) et une position arrêt pour couper l'alimentation électrique du moteur électrique (31) ; et
une unité de notification (50) connectée électriquement au dispositif de commande (40) et recevant des informations du dispositif de commande (40),
**caractérisé en ce que**,
dans le cas où une position initiale, qui est la position de changement de vitesse à un moment où le commutateur principal (32) est commuté de la position arrêt à la position marche, se situe à une position autre qu'une position BAS, le dispositif de commande (40) amène l'unité de notification (50) à délivrer en sortie une alarme.

2. Véhicule à enfourcher (1) selon la revendication 1, dans lequel
lorsque le commutateur principal (32) est commuté de la position arrêt à la position marche, le dispositif de commande (40) acquiert la position initiale sur la base du résultat de détection du capteur (27).

3. Véhicule à enfourcher (1) selon la revendication 1 ou 2, dans lequel
l'unité de notification (50) comporte une unité de compteur (51), et
le dispositif de commande (40) amène l'unité de compteur (51) à délivrer en sortie une alarme.

4. Véhicule à enfourcher (1) selon la revendication 3, dans lequel
l'unité de compteur (51) comporte une unité d'affichage d'avertissement (53) affichant une anomalie de la transmission à variation continue (21), et
le dispositif de commande (40) amène l'unité d'affichage d'avertissement (53) à délivrer en sortie une alarme.

5. Véhicule à enfourcher (1) selon la revendication 3 ou 4, dans lequel
l'unité de notification (50) comporte une unité de sortie sonore (54), et
le dispositif de commande (40) amène l'unité de sortie sonore (54) à délivrer en sortie une alarme.

6. Véhicule à enfourcher (1) selon l'une quelconque des revendications 1 à 5, dans lequel
le dispositif de commande (40) arrête l'alarme.

7. Véhicule à enfourcher (1) selon l'une quelconque des revendications 1 à 6, dans lequel
le dispositif de commande (40) arrête l'alarme lorsqu'il est satisfait au moins l'une d'une première condition selon laquelle la position de changement de vitesse devient la position BAS et d'une seconde condition selon laquelle un temps prédéterminé s'écoule après la sortie de l'alarme.

8. Véhicule à enfourcher (1) selon l'une quelconque des revendications 1 à 7, dans lequel
le dispositif de commande (40) comporte une unité de stockage (44), et
l'unité de stockage (44) stocke une position finale, qui est la position de changement de vitesse à un moment où le commutateur principal (32) est commuté de la position marche à la position arrêt.

9. Véhicule à enfourcher (1) selon la revendication 8, dans lequel
l'unité de stockage (44) stocke la position finale lorsque le commutateur principal (32) est commuté de la position marche à la position arrêt.

10. Véhicule à enfourcher (1) selon la revendication 8 ou 9, dans lequel
l'unité de stockage (44) stocke la position finale conjointement avec un moment auquel le commutateur principal (32) est commuté de la position marche à la position arrêt.

11. Véhicule à enfourcher (1) selon l'une quelconque des revendications 8 à 10, dans lequel
lorsque la position finale se situe à une position autre que la position BAS, le dispositif de commande (40) établit un indicateur déterminé, et l'unité de stockage (44) stocke l'indicateur déterminé.

12. Véhicule à enfourcher (1) selon l'une quelconque des revendications 8 à 11, dans lequel
l'unité de stockage (44) stocke la position finale lorsque le commutateur principal (32) est commuté de la position marche à la position arrêt, puis le dispositif de commande (40) désactive l'alimentation électrique du dispositif de commande (40).

13. Véhicule à enfourcher (1) selon l'une quelconque des revendications 8 à 12, dans lequel
le dispositif de commande (40) comporte une unité d'interface (45) destinée à délivrer en sortie, à un dispositif externe (46), des informations stockées dans l'unité de stockage (44).
